# EUROPÄISCHE PATENTSCHRIFT

(11) **EP 1 311 406 B1**
(45) Veröffentlichungstag und Bekanntmachung des Hinweises auf die Patenterteilung: **26.09.2007**
(21) Anmeldenummer: 00962395.0
(22) Anmeldetag: 25.08.2000
(51) Int. Cl.: B60N 2/02, B60N 2/24

(54) **SITZ ZUR PERSONENBEFÖRDERUNG, INSBESONDERE FLUGGASTSITZ**
PERSONAL TRANSPORTATION SEAT IN PARTICULAR FOR AIRCRAFT PASSENGERS
SIEGE POUR LE TRANSPORT DE PASSAGERS, EN PARTICULIER SIEGE POUR PASSAGERS AERIENS

(43) Veröffentlichungstag der Anmeldung: 21.05.2003
(73) Patentinhaber: Recaro Aircraft Seating GmbH & Co. KG, 74523 Schwäbisch Hall (DE)
(72) Erfinder: ABT, Guido, 74523 Schwäbisch Hall (DE); SCHÜRG, Hartmut, 74523 Schwäbisch Hall (DE); KOCH, Bernd, 74523 Schwäbisch Hall (DE)
(74) Vertreter: Bartels, Martin Erich Arthur
(86) Internationale Anmeldenummer: PCT/EP2000/008346
(87) Internationale Veröffentlichungsnummer: WO 2002/016161

(56) Entgegenhaltungen:
- DE-C- 19 728 743
- FR-A- 2 153 584
- US-A- 4 454 390
- US-A- 4 695 682
- US-A- 5 174 526

## Beschreibung

Die Erfindung bezieht sich auf einen Sitz zur Personenbeförderung, insbesondere Fluggastsitz, mit den Merkmalen des Oberbegriffes des Patentanspruches 1. Ein derartiger Sitz ist bekannt aus der US-A-4 454 390.

US-Patentschrift 5,174,526 zeigt einen Fluggastsitz, bei dem eine in der Rückenlehne eingebaute Lordosenstütze vom Sitzbenutzer durch Belasten der Rückenlehne aus einer am weitesten vorgewölbten Lage gegen die angreifende Rückstellkraft einer als Kraftspeicher dienenden Federanordnung in eine seinen Wünschen angepaßte Lage zurückbewegbar ist, nachdem der Sitzbenutzer die den Kraftspeicher normalerweise blockierende Verriegelungseinrichtung in ihren unwirksamen Zustand gebracht hat. Die hierfür vorgesehene Schalteinrichtung weist eine manuell betätigbare Drucktaste auf, die in der seitlichen Armlehne des Sitzes angeordnet ist, wobei die Betätigungskraft der Drucktaste über eine Bowdenzuganordnung als Stellkraft auf die Verriegelungseinrichtung übertragen wird.

In entsprechender Weise ist die Neigung der Rückenlehne bei diesem bekannten Fluggastsitz gegen die Rückstellkraft einer weiteren, ebenfalls als Kraftspeicher dienenden Federanordnung vom Sitzbenutzer durch Belasten der schwenkbaren Rückenlehne einstellbar, nachdem der Kraftspeicher in entsprechender Weise durch Betätigen einer weiteren Drucktaste über einen zugehörigen Bowdenzug wiederum entriegelt ist. In beiden Fällen werden die betreffenden Sitzteile, d.h. Lordosenstütze und schwenkbare Rückenlehne, bei Betätigen der jeweiligen Drucktaste und fehlender, vom Sitzbenutzer aufgebrachter Belastung durch die Rückstellkraft in die jeweilige Ausgangsstellung zurückgeführt, so daß die Rückenlehne beispielsweise in die für den Landevorgang vorgeschriebene aufrechte Einstellage gebracht wird.

Die für den Sitzbenutzer durch die Einstellbarkeit der verstellbaren Sitzteile gebotene Verbesserung des Sitzkomforts wird in nachteiliger Weise durch einen entsprechend hohen Bedienungsaufwand erkauft. Für die Betätigung der betreffenden Drucktasten und die mechanische Übertragung der Stellkraft über die Bowdenzugeinrichtung auf die betreffende Verriegelungseinrichtung ergibt sich eine verhältnismäßig hohe Betätigungskraft, die vom Sitzbenutzer aufzubringen ist.

Durch die US-A-4,454,390 ist es bekannt, Sitzteile individuell zu verstellen, wobei jedes verstellbare Sitzteil eine Schalteinrichtung mit einem Servoantrieb aufweist und jeder Servoantrieb ist steuerbar durch einen manuell bewegbaren Griffhebel, der in seiner Form und Lageanordnung der Kontur des jeweiligen zu verstellenden Sitzteils nachempfunden ist. So läßt sich über den jeweiligen Servoantrieb in jeweils beiden Richtungen eine Neigungseinstellung der Rückenlehne vornehmen, eine Längeneinstellung des eigentlichen Sitzteiles sowie das Sitzteil an seiner Vorderseite und im rückwärtigen Bereich getrennt voneinander anheben und absenken. Dabei ist für jeden Bewegungsvorgang des Sitzteils das Ansteuern des zugeordneten Servoantriebes über die genannten Griffhebel notwendig. Für jeden Verstellvorgang eines Sitzteils ist also eine Ansteuerung von Hand über die Griffhebel notwendig und es ist nicht so, daß im Sinne der eingangs beschriebenen Lösung nach Durchführen eines Entriegelungsvorganges durch den Sitzbenutzer automatisch ohne weiteres Zutun eine angreifende Rückstellkraft einer als Kraftspeicher dienenden Federanordnung einen Einstellvorgang von sich aus vornimmt, beispielsweise die Rückenlehne in ihre für den Landevorgang vorgeschriebene aufrechte Einstellage bringt. Insbesondere in Notfallsituationen, wo gegebenenfalls nur wenig Handlungszeit zur Verfügung steht, erscheint die bekannte Lösung dann als wenig tauglich, sofern man sie für Fluggastsitze einsetzen möchte.

Ausgehend von diesem Stand der Technik liegt der Erfindung die Aufgabe zugrunde, einen Sitz zu schaffen, der dem Sitzbenutzer ein Höchstmaß an bequemer und einfacher Bedienung der für die Verstellung von Sitzteilen vorhandenen Einrichtungen bietet sowie an Sicherheit. Diese Aufgabe ist bei einem Sitz mit den Merkmalen des Patentanspruches 1 in seiner Gesamtheit gelöst.

Dadurch, das erfindungsgemäß als Kraftspeicher zumindest eine normalerweise blockierte Gasdruckfederanordnung vorgesehen ist, die mittels eines Steuerventils entriegelbar ist, welches durch die vom betreffenden Servoantrieb erzeugte Stellkraft gegen eine Rückführkraft betätigbar ist und daß zur Notentriegelung dieser Gasdruckfederanordnung eine unabhängig vom betreffenden Servoantrieb manuell betätigbare Stellvorrichtung zum Überführen der Verriegelungseinrichtung in den unwirksamen Zustand vorgesehen ist, kann bei einem möglichen Ausfall der Bordversorgung, was zu einem Ausfall der Funktion der Servoantriebe führen könnte, eine Notentriegelung zur Verfügung gestellt werden, so daß auch bei einem dahingehenden Ausfall der Bordversorgung die beweglichen Sitzteile in eine definierte, beispielsweise für den Landevorgang vorgeschriebene Lage selbsttätig durch die Wirkung der Rückstellkraft überführbar sind. Die im Stand der Technik bereits vorgesehene Entriegelungseinrichtung mittels einer manuell betätigbaren Drucktaste und einer Bowdenzuganordnung erlaubt dabei eine entsprechende Stellkraft mechanisch auf die Verriegelungseinrichtung zu übertragen, und zwar ohne Einsatz der genannten Servoantriebe für den sonst üblichen Funktionsbetrieb des Sitzes.

Als Servoantrieb kann ein über das Bordnetz des zugehörigen Beförderungsmittels, insbesondere des betreffenden Luftfahrzeuges, gespeister elektrischer Servoantrieb vorgesehen sein, der einen die Stellkraft erzeugenden Elektromagneten aufweist und mittels eines Steuerschalters aktivierbar ist, der durch den manuell bewegbaren Griffhebel betätigbar ist.

Alternativ kann ein die Stellkraft hydraulisch oder pneumatisch erzeugender Servoantrieb vorgesehen sein, wobei ein Arbeitszylinder die Stellkraft für den Entriegelungsvorgang liefert, also beispielsweise das Steuerventil der betreffenden Gasdruckfederanordnung betätigt. In diesem Fall ist der vom Sitzbenutzer manuell bewegbare Griffhebel einem Schaltventil zugeordnet.

Um den Sitzbenutzer zu entlasten, ist vorzugsweise der jeweilige Griffhebel nach Betätigen von Hand mittels Federkraft in seine Ausgangsstellung zurück bewegbar.

Im folgenden wird die Erfindung anhand der Zeichnung näher erläutert. Es zeigen in prinzipieller und nicht maßstäblicher Darstellung die
- Fig.1: eine Draufsicht einer als Kraftspeicher dienenden Gasdruckfederanordnung mit einer durch eine manuell betätigbare Drucktaste über eine Bowdenzuganordnung betätigbaren Notentriegelungseinrichtung, ohne einen erfindungsgemäß vorgesehenen Servoantrieb;
- Fig.2: eine der Fig.1 analoge Ansicht, wobei der erfindungsgemäß vorgesehene Servoantrieb in schematisch vereinfachter Darstellung hinzugefügt ist;
- Fig.3: eine perspektivische, stark schematisch vereinfachte Darstellung des einen seitlichen Trägers für eine daran schwenkbar gelagerte, nicht gezeigte Rückenlehne eines Fluggastsitzes, wobei am seitlichen Träger eine Gasdruckfederanordnung als Kraftspeicher angebracht ist, der mittels eines elektrischen Servoantriebes entriegelbar ist, wobei Griffhebel elektrischer Steuerschalter für zwei Servoantriebe symbolisch dargestellt sind;
- Fig.4: eine perspektivische Ansicht eines Fluggastsitzes mit schwenkbarer Rückenlehne und schwenkbarer Fußstütze, wobei die Anordnung der Griffhebel zugehöriger Steuerschalter in der Armlehne angedeutet ist, und
- Fig.5: einen in größerem Maßstab und perspektivisch gezeichneten Ausschnitt aus Fig.4.

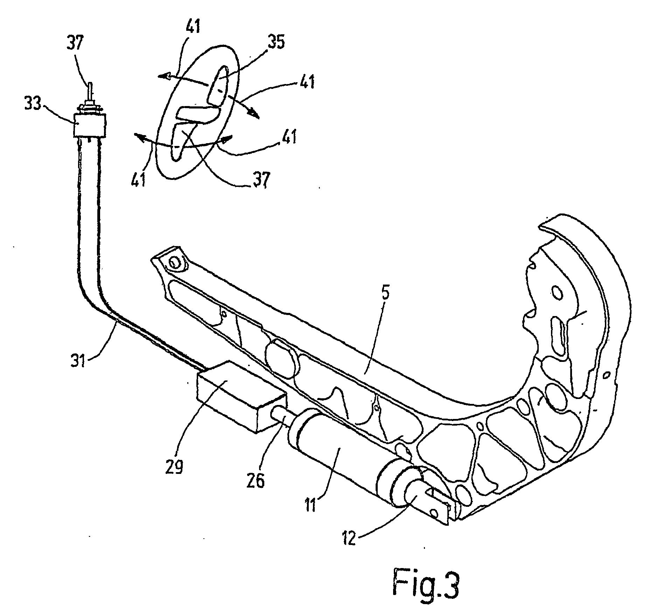

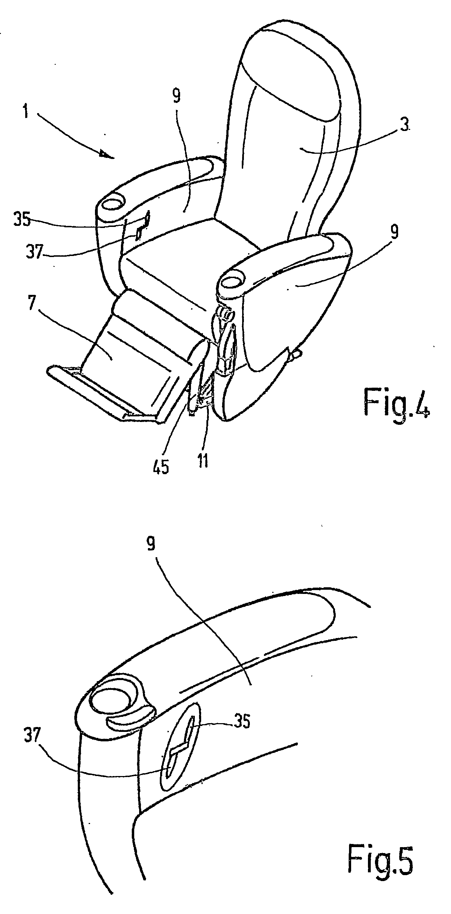

Ein in Fig.4 dargestellter, als Ganzes mit 1 bezeichneter Fluggastsitz weist eine Rückenlehne 3 auf, die schwenkbar an seitlichen Trägern gelagert ist, von denen lediglich einer in Fig.3 dargestellt und mit 5 bezeichnet ist. Der Fluggastsitz 1 weist außerdem eine verstellbare, schwenkbar gelagerte Fußstütze 7 auf. Weitere Hauptbestandteile des Sitzes 1 sind seitlich neben der Sitzfläche befindliche Armlehnen 9.

In der bei derartigen Sitzen üblichen Weise sind die verstellbaren Sitzteile, d.h. bei der hier beispielhaft gezeigten und beschriebenen Ausführungsform die Rückenlehne 3 und die Fußstütze 7, jeweils normalerweise gegen die Schwenkbewegung verriegelt und sind mittels einer durch einen Kraftspeicher zur Verfügung gestellten Rückstellkraft jeweils in eine Endlage vorgespannt. Bei der Rückenlehne 3 ist dies die aufrechte Endstellung, wie sie für den Landevorgang eines betreffenden Luftfahrzeuges vorgeschrieben ist.

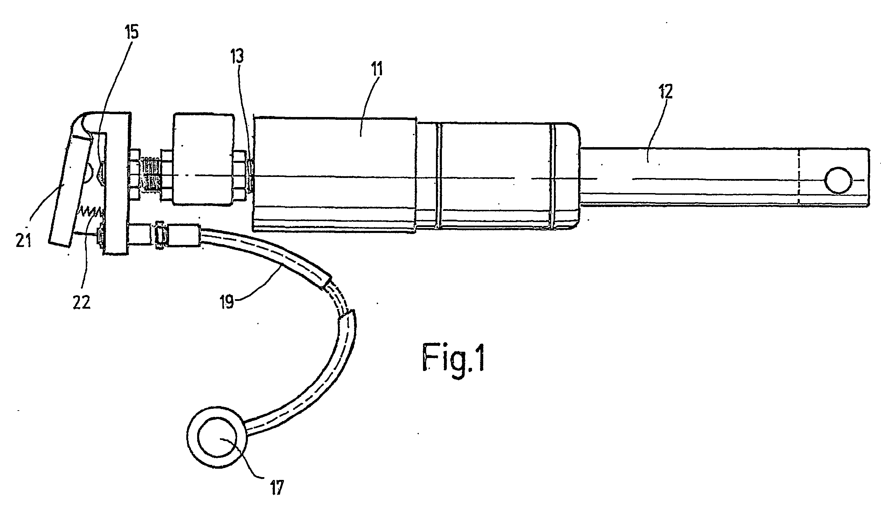

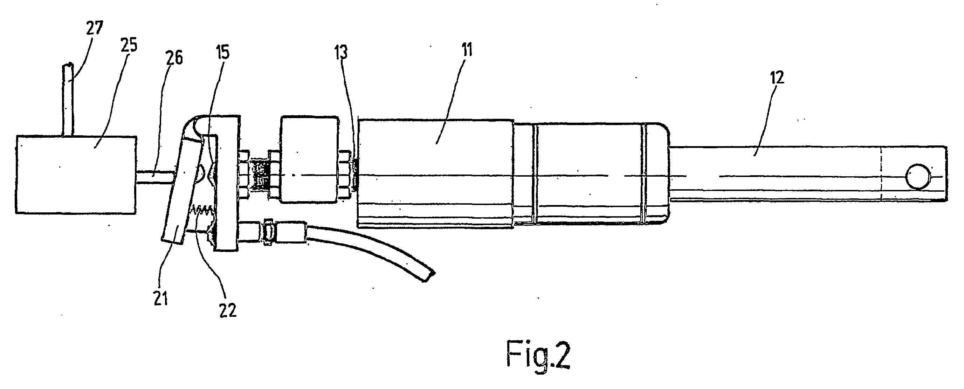

Die Fig.1 bis 3 zeigen eine Gasdruckfederanordnung 11 als Beispiel eines Kraftspeichers zur Erzeugung dieser Rückstellkraft, die über eine Kolbenstange 12 in den betreffenden Sitzteil eingeleitet wird. Die Gasdruckfederanordnung 11 weist eine integrierte Verriegelungseinrichtung auf, d.h. die Kolbenstange 12 ist normalerweise gegen Axialverschiebung arretiert. Die Verriegelungseinrichtung kann durch ein nicht näher dargestelltes Steuerventil 13 in den unwirksamen Zustand überführt werden, d.h. die Gasdruckfederanordnung 11 kann entriegelt werden, wenn ein Stößel 15 des Steuerventils 13 betätigt wird (nach rechts in Fig. 1 und 2).

Fig.1 zeigt eine Einrichtung für eine manuelle Notentriegelung, wobei über eine vom Sitzbenutzer manuell betätigbare Drucktaste 17 (Fig.1) und eine Bowdenzuganordnung 19 eine Stellkraft auf einen schwenkbar gelagerten Betätigungshebel 21 übertragbar ist, der gegen die Kraft eine Rückstellfeder 22 den Stößel 15 des Steuerventils 13 beaufschlagt, um die Gasdruckfederanordnung 11 zu entriegeln. Die Rückstellkraft der Gasdruckfederanordnung 11 kann dadurch wirksam werden, um den betreffenden Sitzteil in seine Endlage zu bewegen.

Die Fig. 2 und 3 verdeutlichen das erfindungsgemäße Konzept der servounterstützten Erzeugung der Stellkraft zur Entriegelung der Gasdruckfederanordnung 11 durch Betätigen des Stößels 15 des Steuerventils 13. Wie in Fig.2 dargestellt ist, weist ein Servoantrieb 25 ein Betätigungsglied 26 auf, durch das der Betätigungshebel 21 beaufschlagbar und schwenkbar ist, um das Steuerventil 13 über den Stößel 15 zu betätigen. Bei der Darstellung von Fig.2 ist der Servoantrieb 25 über einen Steueranschluß 27 aktivierbar, bei dem es sich um ein elektrisches Kabel, im Falle eines elektrischen servoantriebes, oder um eine Rohrleitung, für den Fall eines pneumatischen oder hydraulischen Servoantriebes, handeln kann.

Fig.3 zeigt das Beispiel eines elektrischen Servoantriebes mit einem nicht näher dargestellten Elektromagneten 29, der über ein Kabel 31 sowie einen Steuerschalter 33 aktivierbar ist. Der Steuerschalter 33 ist mit dem Bordnetz des betreffenden Fahrzeuges oder Luftfahrzeuges verbunden, was nicht dargestellt ist. Bei Erregung des Elektromagneten 29 wird das Betätigungsglied 26 verschoben, um über den Stößel 15 das Steuerventil 13 zur Entriegelung der Gasdruckfederanordnung 11 zu betätigen. Bei ausgeschalteter Erregung kehrt das Betätigungsglied 26 unter Einfluß der dem Steuerventil 13 innewohnenden Rückführkraft und der Rückstellfeder 22 (Fig.2) wieder in die Ausgangsposition zurück, so daß die Gasdruckfeder 11 wiederum verriegelt ist.

Fig.3 zeigt in symbolischer Darstellung Griffhebel 35 und 37, von denen der Griffhebel 35 mit dem Schalterbetätigungsglied 39 des Steuerschalters 33 für den Elektromagneten 29 des Servoantriebes der Rückenlehne 3 verbunden ist. Der Griffhebel 37 wiederum ist dem Schalterbetätigungsglied des nicht dargestellten Steuerschalters für die Fußstütze 7 zugeordnet.

Die Griffhebel 35 und 37 sind in Form und Lageanordnung den Konturen des jeweils zugeordneten, verstellbaren Sitzteiles nachempfunden und sind jeweils in Richtung der Bogenpfeile 41 vörwärts und rückwärts schwenkbar. Bei jeder dieser Schwenkbewegungen, die gegen eine rückstellende Federkraft erfolgen, wird über das betreffende Schalterbetätigungsglied, d.h. im Falle der Rückenlehne 3 über das Schalterbetätigungsglied 39, der zugehörige Steuerschalter betätigt, um jeweils den Elektromagneten zu aktivieren, d.h. im Falle der Rückenlehne den Elektromagneten 29. In sinnfälliger Weise kann der Benutzer somit für die Verstellung der Rückenlehne 3 nach vorn oder nach hinten jeweils die Entriegelung durch Schwenken des Griffhebels 35 nach vorn oder nach hinten bewirken.

Fig. 4 und 5 zeigen die Anordnung der Griffhebel 35 und 37 an der Armlehne 9 des Sitzes 1. Die Fig.4 zeigt außerdem die Zusammenwirkung der der Fußstütze 7 zugeordneten Gasdruckfederanordnung 11 mit dem schwenkbaren Gestänge 45 der Fußstütze 7. Diese ist durch die Rückstellkraft der Gasdruckfederanordnung 11 für eine Schwenkbewegung nach oben vorgespannt, d.h. bei Entriegelung mittels des Griffhebels 37 nimmt die Fußstütze 7 ihre angehobene Stellung ein, aus der sie durch den Sitzbenutzer nach Wunsch nach unten schwenkbar ist, um in der gewünschten Stellung verriegelt zu werden.

## Patentansprüche

1. Sitz zur Personenbeförderung, insbesondere Fluggastsitz (1), mit individuell verstellbaren Sitzteilen (3,7), von denen zumindest einer gegen eine Rückstellkraft bewegbar ist, mit einem durch eine Verriegelungseinrichtung normalerweise blockierten Kraftspeicher (11) und mit einer Schalteinrichtung (13,15), durch die die Verriegelungseinrichtung in einen unwirksamen Zustand überführbar ist, in dem der Kraftspeicher (11) zur Erzeugung der am bewegbaren Sitzteil (3,7) wirksamen Rückstellkraft entriegelt ist, wobei die Schalteinrichtung (13,15) für jeden verstellbaren Sitzteil (3,7) einen Servoantrieb (25,29) zum Erzeugen einer die jeweilige Verriegelungseinrichtung unwirksam machenden Stellkraft aufweist und wobei jeder Servoantrieb (25,29) durch einen manuell bewegbaren Griffhebel (35,37) steuerbar ist, der in seiner Form und Lageanordnung der Kontur des jeweiligen, zu verstellenden Sitzteils (3,7) nachempfunden ist, **dadurch gekennzeichnet, daß** als Kraftspeicher zumindest eine normalerweise blockierte Gasdruckfederanordnung (11) vorgesehen ist, die mittels eines Steuerventils (13) entriegelbar ist, welches durch die vom betreffenden Servoantrieb (25,29) erzeugte Stellkraft gegen eine Rückführkraft betätigbar ist und daß zur Notentriegelung zumindest einer Gasdruckfederanordnung (11) eine unabhängig vom betreffenden Servoantrieb manuell betätigbare Stellvorrichtung (17,19,21) zum Überführen der Verriegelungseinrichtung in den unwirksamen Zustand vorgesehen ist.

2. Sitz nach Anspruch 1, **dadurch gekennzeichnet, daß** ein elektrischer Servoantrieb mit einem die Stellkraft erzeugenden Elektromagneten (29) und einem mittels des manuell bewegbaren Griffhebels (35,37) betätigbaren Steuerschalter (33) vorgesehen ist.

3. Sitz nach Anspruch 1 oder 2, **dadurch gekennzeichnet, daß** ein die Stellkraft hydraulisch oder pneumatisch erzeugender Servoantrieb (25) vorgesehen ist.

4. Sitz nach einem der Ansprüche 1 bis 3, **dadurch gekennzeichnet, daß** für jeden verstellbaren Sitzteil, wie Rückenlehne (3), Beinauflage oder Fußstütze (1), ein separater, der jeweiligen Sitzteilkontur angepaßter Griffhebel (35,37) vorgesehen ist, die getrennt voneinander betätigbar sind.

5. Sitz nach Anspruch 4, **dadurch gekennzeichnet, daß** der jeweilige Griffhebel (35,37) nach Betätigen von Hand mittels Federkraft in seine Ausgangsstellung zurückbewegbar ist.

6. Sitz nach Anspruch 5, **dadurch gekennzeichnet, daß** die Griffhebel (35,37) am Sitz (1), insbesondere an dessen Armlehne (9), angeordnet sind oder außerhalb des Sitzes an Innenwandteilen einer Flugzeugkabine oder an einer Steuerkonsole, die dem jeweiligen Sitz zuordenbar ist.

7. Sitz nach einem der Ansprüche 4 bis 6, **dadurch gekennzeichnet, daß** die Griffhebel (35,37) zwei gegenläufige Einstellbewegungen für die Sitzteile (3,7) ermöglichen.

8. Sitz nach einem der Ansprüche 1 bis 7, **dadurch gekennzeichnet, daß** die Stellvorrichtung zur Notentriegelung einen mittels einer manuell beaufschlagbaren Taste (17) betätigbaren Bowdenzug (19) für eine mechanische Betätigung der Verriegelungseinrichtung aufweist.

## Claims

1. Seat for the transport of persons, in particular an airplane passenger seat (1), with individually adjustable seat parts (3, 7), of which at least one can be moved against a returning force, with a force store (11) normally blocked by means of a locking means, and with a switching means (13, 15), with which the locking means can be transferred into an ineffective condition in which the force store (11) is unlocked for generating the returning force applied to the moveable seat part (3, 7), whereby the switching means (13, 15) comprises a servo drive (25, 29) for each adjustable seat part (3, 7) for generating an adjusting force for rendering the relevant locking means ineffective, and whereby each servo drive (25, 29) can be controlled by means of a manually moveable lever (35, 37), the shape and position of which mimics the contours of the relevant seat part (3, 7) to be adjusted, **characterised in that** at least one normally blocked gas pressure spring arrangement (11) is envisaged as a force store, which can be unlocked by means of a control valve (13), the same being activated by means of adjusting force generated by the relevant servo drive (25, 29) against a returning force, and **in that** a manually activated adjusting means (17, 19, 21) for transferring the locking means into the ineffective condition is envisaged independently from the relevant servo drive for an emergency unlocking of at least one gas pressure spring arrangement (11).

2. Seat according to Claim 1, **characterised in that** an electric servo drive with an electromagnet (29) generating the adjusting force, and a control switch (33) activated by means of a manually moveable lever (35, 37) are envisaged.

3. Seat according to Claim 1 or 2, **characterised in that** a servo drive (25) generating the adjusting force in a hydraulic or pneumatic way is envisaged.

4. Seat according to one of the Claims 1 to 3, **characterised in that** a separate lever (35, 37) is envisaged for each adjustable seat part such as the back rest (3), leg rest or foot rest (1), which mimic the relevant seat contour and can be activated independently from each other.

5. Seat according to Claim 4, **characterised in that** the relevant handle (35, 37) can be manually moved back into its starting position by means of spring force.

6. Seat according to Claim 5, **characterised in that** the levers (35, 37) are located on the seat (1), in particular on the arm rest (9) of the same, or outside of the seat on the inside wall sections of an airplane cabin, or within a control console associated with the relevant seat.

7. Seat according to one of the Claims 4 to 6, **characterised in that** the levers (35, 37) enable two counteractive adjustment movements for the seat parts (3, 7).

8. Seat according to Claims 1 to 7, **characterised in that** the adjusting means comprises a Bowden traction arrangement (19) manually activated by means of a switch (17) for an emergency unlocking and a mechanical activation of the unlocking means.

## Revendications

1. Siège pour le transport de passagers, en particulier siège pour passagers d'avion (1), comprenant des parties de siège (3, 7) réglables individuellement, dont au moins une est mobile à l'encontre d'une force de rappel, un accumulateur de force (11) normalement bloqué par un dispositif de verrouillage, et un dispositif de commande (13, 15) par lequel le dispositif de verrouillage peut être mis dans un état inactif dans lequel l'accumulateur de force (11) est déverrouillé pour la production de la force de rappel active sur la partie de siège (3, 7) mobile, le dispositif de commande (13, 15) présentant pour chaque partie de siège (3, 7) réglable un servomoteur (25, 29) pour la production d'une force de réglage rendant inactif le dispositif de verrouillage respectif, et chaque servomoteur (25, 29) pouvant être commandé par une manette (35, 37) mobile manuellement qui, par sa forme et sa disposition, s'inspire du contour de la partie de siège (3, 7) respective à régler, **caractérisé en ce que**, en tant qu'accumulateur de force, il est prévu au moins un dispositif de ressort à pression de gaz (11) normalement bloqué, qui est déverrouillable au moyen d'une soupape de commande (13) qui peut être actionnée, à l'encontre d'une force de retour, par la force de réglage produite par le servomoteur (25, 29) concerné, et **en ce que**, pour le déverrouillage d'urgence d'au moins un dispositif de ressort à pression de gaz (11), il est prévu un dispositif de réglage (17, 19, 21), actionnable manuellement indépendamment du servomoteur concerné, pour mettre le dispositif de verrouillage dans l'état inactif.

2. Siège selon la revendication 1, **caractérisé en ce qu'**il est prévu un servomoteur électrique ayant un électroaimant (29) produisant la force de réglage et un commutateur de commande (33) actionnable au moyen de la manette (35, 37) mobile manuellement.

3. Siège selon la revendication 1 ou 2, **caractérisé en ce qu'**il est prévu un servomoteur (25) produisant la force de réglage de façon hydraulique ou pneumatique.

4. Siège selon une des revendications 1 à 3, **caractérisé en ce que**, pour chaque partie de siège réglable, comme le dossier (3), le repose-jambes ou le repose-pieds (1), il est prévu une manette (35, 37) séparée, adaptée au contour respectif de partie de siège, qui est actionnable indépendamment des autres.

5. Siège selon la revendication 4, **caractérisé en ce que**, après l'actionnement à la main, la manette (35, 37) respective peut être remise dans sa position initiale au moyen de la force de ressort.

6. Siège selon la revendication 5, **caractérisé en ce que** les manettes (35, 37) sont disposées sur le siège (1), en particulier sur son accotoir (9), ou en dehors du siège sur des parties de paroi intérieure d'une cabine d'avion ou sur une console de commande qui peut être affectée au siège respectif.

7. Siège selon une des revendications 4 à 6, **caractérisé en ce que** les manettes (35, 37) permettent deux mouvements de réglage de sens contraires pour les parties de siège (3, 7).

8. Siège selon une des revendications 1 à 7, **caractérisé en ce que** le dispositif de réglage présente, pour le déverrouillage d'urgence, un câble sous gaine (19), actionnable au moyen d'une touche (17) pouvant être pressée à la main, pour un actionnement mécanique du dispositif de verrouillage.
